# EUROPÄISCHE PATENTSCHRIFT

(11) **EP 2 270 300 B1**
(45) Veröffentlichungstag und Bekanntmachung des Hinweises auf die Patenterteilung: **12.02.2014**
(21) Anmeldenummer: 10005078.0
(22) Anmeldetag: 14.05.2010
(51) Int. Cl.: E05F 15/00, B60J 10/08

(54) **Profilleiste mit ein- oder angeformten Kanälen**
Sealing strip with moulded-in or moulded-on channels
Joint d'étanchéité avec de canaux moulés

(30) Priorität: 30.06.2009 DE 202009008973 U
(43) Veröffentlichungstag der Anmeldung: 05.01.2011
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Grein, Horst, 34637 Schrecksbach (DE)
(74) Vertreter: König, Beate

(56) Entgegenhaltungen:
- EP-A1- 1 321 616
- DE-A1- 2 650 860
- DE-A1- 3 514 515
- DE-U1- 8 535 772
- DE-U1- 29 804 732
- DE-U1-202006 000 858

## Beschreibung

Die Erfindung betrifft eine Profilleiste mit ein- oder angeformten Kanälen.

Beispielsweise Fingerschutzprofile für Türen können einen Einklemmschutz in Form von im Profil vorgesehenen Hohlkammern mit Druckwellenschaltern aufweisen. Für die Signalerfassung und -übertragung werden Druckwellenschläuche sowie entsprechende Anschluss- und Verbindungselemente wie Y-Stücke etc. verwendet. Ein solches mit Druckwellenschaltern und -schläuchen arbeitendes Fingerschutzprofil ist beispielsweise in der DE 199 58 305 C2 und in der EP 1 111 633 A2 beschrieben.

Die Anordnung solcher Schläuche kann je nach der vorhandenen Profilgeometrie zu ungewünschten Versperrungen führen oder gegebenenfalls nicht am vorgesehenen Ort möglich sein. Die Schläuche und die zugehörigen Anschluss- und Verbindungselemente müssen zudem extra montiert und für die verschiedenen Einsatzfälle vorgehalten werden.

Die Verbindung von Kunststoffteilen durch thermische Behandlungsverfahren ist bekannt. So sind z.B. bei der Runderneuerung von Fahrzeugreifen verschiedene Elastomermaterialien durch Vulkanisation verbunden worden. In der DE 444 338 C ist beschrieben, bei Sitzkissen, die aus einem Schlauch gebildet sind, benachbarte Luftkammern anzuvulkanisieren.

Beispielsweise in der DE 20 2008 015 551 U1 ist offenbart, bei einer Fensterprofilanschlussleiste aus Kunststoff eine Dichtlippe aus thermoplastischem Material im Postkoextrusionsverfahren an die Anschlussleiste anzuextrudieren.

Die gattungsgemäße DE 85 35 772 U1 offenbart ein Torblatt mit einem stirnseitigen Profil 6, das an seinem dem Torblatt abgewandten Ende von Außenwandungen 9 umschlossene, zylinderförmige, hermetisch abgeschlossene Hohlräume 10 aufweist. An die Hohlräume 10 sind über Verbindungsleitungen 13 Druck-Signal-Wandler 15 angeschlossen. Beim Auftreffen des Torblatts auf ein Hindernis werden die Außenwandungen 9 zusammengedrückt und der Hohlraum 10 erfährt eine relativ große Volumenänderung, was zu einem Auslösen des Druck-Signal-Wandlers 15 führt. Der Antrieb des Torblatts kann dann gestoppt oder reversiert werden.

Ein aus der EP 1 321 616 A1 bekanntes Hohlprofil 16 einer Fensterdichtung kann anextrudiert sein. Es ist mit einer Flüssigkeit gefüllt, deren Leitfähigkeit sich bei einer durch einen Einklemmvorgang bewirkten Querschnittsverringerung ändert. Ein Drucksensor 56 befindet sich am Ende des Hohlprofils 16.

Der Erfindung liegt die Aufgabe zugrunde, ein Fingerschutzprofil zu schaffen, das einfach und kostengünstig zu fertigen sowie zu montieren ist.

Diese Aufgabe ist durch eine Profilleiste mit den Merkmalen des Anspruchs 1 gelöst. Vorteilhafte Weiterbildungen der erfindungsgemäßen Profilleiste sind Gegenstand der Unteransprüche.

Die Erfindung betrifft somit eine Profilleiste mit einer Druckwellenkammer, insbesondere für eine Fahrzeugtür, enthaltend mindestens einen angeformten Kanal. Der Kanal ist als Verbindungsleitung zu der Druckwellenkammer vorgesehen, die in oder an der Profilleiste ein- oder angeformt ist. Ein Ende der Verbindungsleitung ist abgeschnitten und endet in einem Abstand zum Kammerboden in der Druckwellenkammer.

Durch diese Ausgestaltung kann ein sonst als Zusatzteil verwendeter Verbindungsschlauch gleich bei der Herstellung der Profilleiste komplett in diese integriert werden. Durch das Ein- oder Anformen kann außerdem Material eingespart werden. Werden mehrere Schläuche oder Kanäle in oder an der Profilleiste ein- oder angeformt, aber im Einsatzfall nicht alle benötigt, wird nur entsprechend den Erfordernissen von den Kanälen Gebrauch gemacht. Die nicht benötigten stellen eine Reserve dar, ohne dass irgendein Zusatzarbeitsaufwand anfällt.

Der Kanal ist an einem Ende, d.h. dem mit der Druckwellenkammer verbundenen Ende, abgeschnitten und endet so in einem Abstand zum Kammerboden in der Druckwellenkammer. Durch die Ausstattung der Profilleiste mit einem Druckwellenschalter und somit mindestens einer Druckwellenkammer und einem dieser zugeordneten, ein- oder angeformten Verbindungskanal als Druckwellenleitung ist eine sehr einfach realisierbare Verbindung von Druckwellenkammer und Druckwellenleitung ermöglicht. Zugleich ist deren Anordnung außerordentlich raumsparend.

Die Profilleiste gemäß der Erfindung steht somit automatisch für den Einsatz eines Druckwellenschalters zur Verfügung, ohne dass ein Druckwellenschlauch im Profil extra vorgesehen und montiert werden muss. Dies ist insbesondere bei langen Profilleisten eine große Arbeits- und Materialersparnis. Es ist jedoch auch möglich, den Kanal für andere Zwecke einzusetzen, beispielsweise als Bauteildurchführung für den Transport eines Mediums oder dergleichen.

Derartige Profilleisten finden in Personentransportfahrzeugen als Türdichtleisten und bei Trittschaltern, aber auch bei Rolltoren Anwendung. Ebenso können sie als Einklemmschutz in Fertigungseinrichtungen eingesetzt werden.

Gemäß einer Alternative der Erfindung kann vorgesehen sein, dass in der Profilleiste an einer Wand oder einem Steg oder außen an dieser als Verbindungsleitung ein Schlauch angeformt ist. Auf diese Weise kann auch ein anderes Material für die Druckwellen- bzw. Verbindungsleitung als für die eigentliche Profilleiste verwendet werden und der Schlauch vom Material und den Abmessungen her an den Einsatzfall angepasst werden.

Insbesondere bei einer EPDM-Profilleiste ist der Kanal oder Schlauch im Inneren oder außen an der Profilleiste mit- oder anextrudiert.

Vorzugsweise sind als Anschluss- oder Verbindungsmittel für den Schlauch oder Kanal Steckverbindungsteile vorgesehen, die herkömmliche Bauteile sein können. Es können dann an die an-oder eingeformten Kanäle beispielsweise zu einem Druckwellenschalter führende kurze Schlauchstücke montiert werden.

Bei einer solchen Konfiguration von Druckwellenkammer und Druckwellenleitung ist der Kanal an seinem anderen Ende verschlossen und weist ein Loch zur Aufnahme einer Steckverbindung auf. Für die Verbindung mit dem Druckwellenschalter ist es somit nur erforderlich, das Steckverbindungsteil in das Aufnahmeloch zu stecken und die weiteren Anschlussschläuche und Verbindungsteile zusammenzustecken. Der Montageaufwand ist dadurch sehr gering gehalten.

Die Erfindung wird im folgenden weiter anhand von Ausführungsbeispielen und der Zeichnung beschrieben. Diese Darstellung dient lediglich zu Veranschaulichungszwecken und soll die Erfindung nicht auf die konkret angegebenen Merkmalskombinationen einschränken. Es zeigen
- Fig. 1: eine Teildarstellung einer Fingerschutzleiste mit anextrudierten Schläuchen gemäß einem ersten Ausführungsbeispiel der Erfindung und
- Fig. 2: eine schematische Darstellung einer Fingerschutzleiste mit zwei Hohlkammern und zwei eingeformten Druckwellenschläuchen gemäß einem zweiten Ausführungsbeispiel der Erfindung.

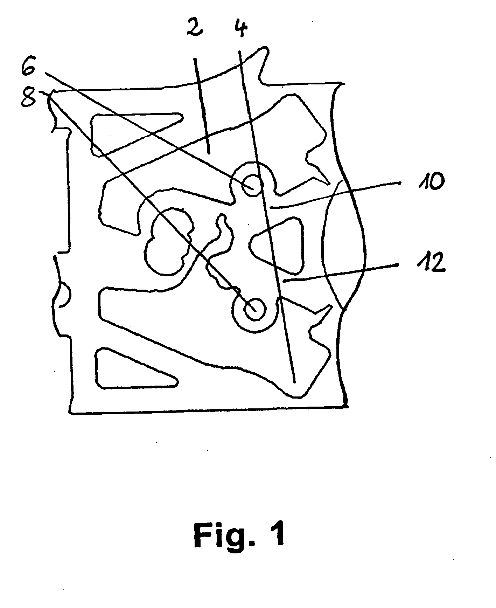

In Fig. 1 ist ein Ausschnitt eines ersten Ausführungsbeispiels einer erfindungsgemäßen Fingerschutzleiste mit zwei Druckwellenkammern 2, 4 und zwei Druckwellenschläuchen 6, 8 gezeigt. Die beiden Druckwellenschläuche 6, 8 sind direkt in Stege 10, 12 der Profilleiste einextrudiert worden, wobei ein Teil des Schlauchmantelmaterials entfallen konnte. Der betreffende Mantelteil ist durch Stegmaterial der Profilleiste gebildet und auf diese Weise auch Raum in der zugehörigen Druckwellenkammer eingespart worden.

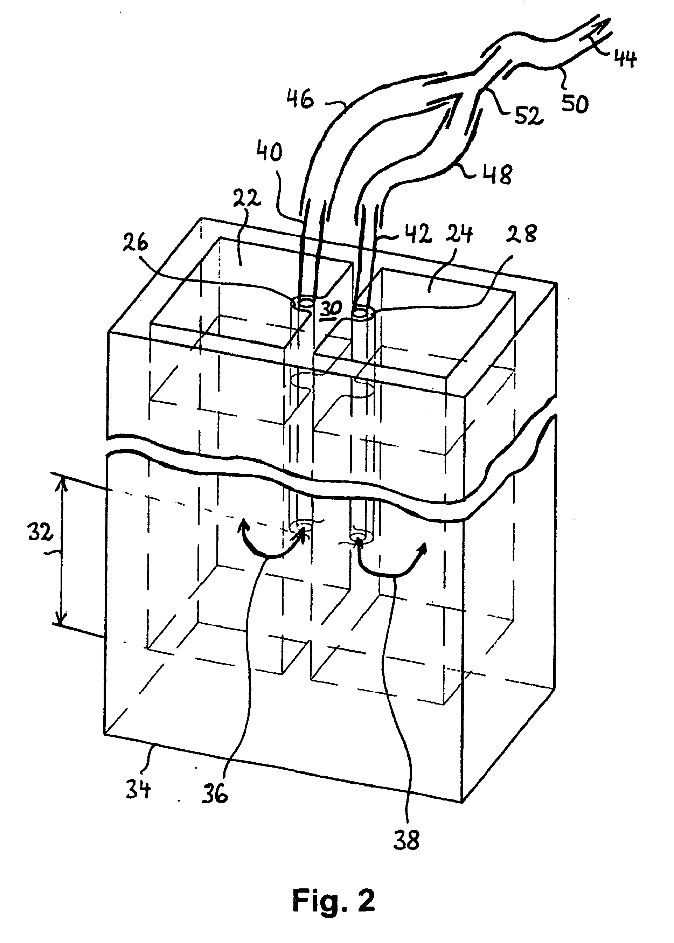

Fig. 2 zeigt ein zweites Ausführungsbeispiel der Erfindung mit zwei Druckwellenkammern 22, 24 und zwei Druckwellenschläuchen 26, 28, die in einen Steg 30 einextrudiert worden sind. Die Druckwellenkammern 22, 24 sind oben und unten verschlossen. Die Druckwellenschläuche 26, 28 sind unten abgeschnitten, so dass ein Abstand 32 zum Profilboden 34 frei bleibt und so eine Verbindung zu der jeweiligen Druckwellenkammer 22, 24 geschaffen worden ist. Die Verbindung ist durch Doppelpfeile 36, 38 angedeutet. Oben sind in die Löcher der Druckwellenschläuche 26, 28 handelsübliche Steckverbindungen 40, 42 gesteckt worden. Für die Verbindung zum nicht dargestellten Druckwellenschalter (veranschaulicht durch Pfeil 44) sind kurze Schlauchstücke 46, 48, 50 sowie ein Y-Stück 52 montiert worden.

## Patentansprüche

1. Profilleiste mit einer Druckwellenkammer, insbesondere für eine Fahrzeugtür, enthaltend mindestens einen angeformten Kanal,
**dadurch gekennzeichnet, dass**
der Kanal als Verbindungsleitung (26, 28) zu der Druckwellenkammer (22, 24) vorgesehen ist, die in oder an der Profilleiste ein- oder angeformt ist, wobei ein Ende der Verbindungsleitung (26, 28) abgeschnitten ist und in einem Abstand (32) zum Kammerboden (34) in der Druckwellenkammer (22, 24) endet.

2. Profilleiste nach Anspruch 1, **dadurch gekenn- zeichnet,** dass der Kanal ein angeformter Schlauch ist.

3. Profilleiste nach Anspruch 1 oder 2, **dadurch ge-kennzeichnet,** dass der Kanal oder Schlauch (6, 8; 26, 28) im Inneren oder außen an der Profilleiste mit- oder anextrudiert ist.

4. Profilleiste nach einem der Ansprüche 1 bis 3, **dadurch gekennzeichnet, dass** mehrere Schläuche (6, 8; 26, 28) oder Kanäle in oder an der Profilleiste ein- oder angeformt sind.

5. Profilleiste nach einem der Ansprüche 1 bis 4, **dadurch gekennzeichnet, dass** als Anschluss- oder Verbindungsmittel für den Schlauch oder Kanal (6, 8; 26, 28) Steckverbindungsteile (40, 42, 52) vorgesehen sind.

6. Profilleiste nach einem der Ansprüche 1 bis 5, **dadurch gekennzeichnet, dass** der Kanal (26, 28) in der Druckwellenkammer (22, 24) als Druckwellenleitung angeordnet ist, an seinem anderen Ende verschlossen ist und ein Loch zur Aufnahme einer Steckverbindung (40, 42) aufweist.

7. Profilleiste nach einem der Amsprüche 1 bis 6, **dadurch gekennzeichnet, dass** mindestens zwei Druckwellenkammern (22, 24) und Kanäle (26, 28) vorgesehen sind.

## Claims

1. Profile strip having a pressure wave chamber, in particular for a vehicle door, containing at least one integrally formed channel,
**characterised in that**
the channel is provided as a connection line (26, 28) to the pressure wave chamber (22, 24) which is moulded-in or integrally formed on the profile strip, wherein one end of the connection line (26, 28) is truncated and terminates at a spaced interval (32) with respect to the chamber base (34) in the pressure wave chamber (22, 24).

2. Profile strip as claimed in claim 1, **characterised in that** the channel is an integrally formed tube.

3. Profile strip as claimed in claim 1 or 2, **characterised in that** the channel or tube (6, 8; 26, 28) is co-extruded or extruded-on in the interior or on the exterior of the profile strip.

4. Profile strip as claimed in any one of claims 1 to 3, **characterised in that** a plurality of tubes (6, 8; 26, 28) or channels are moulded-in or integrally formed on the profile strip.

5. Profile strip as claimed in any one of claims 1 to 4, **characterised in that** plug-in connection parts (40, 42, 52) are provided as attachment means or connection means for the tube or channel (6, 8; 26, 28).

6. Profile strip as claimed in any one of claims 1 to 5, **characterised in that** the channel (26, 28) is disposed in the pressure wave chamber (22, 24) as a pressure wave line, is closed at its other end and has a hole for receiving a plug-in connection (40, 42).

7. Profile strip as claimed in any one of claims 1 to 6, **characterised in that** at least two pressure wave chambers (22, 24) and channels (26, 28) are provided.

## Revendications

1. Baguette profilée avec une chambre d'onde de pression, en particulier pour une porte de véhicule, contenant au moins un canal formé,
**caractérisée en ce que**
le canal est prévu en tant que conduite de raccordement (26, 28) à la chambre d'onde de pression (22, 24) qui est formée dans ou sur la baguette profilée, une extrémité de la conduite de raccordement (26, 28) étant coupée et se terminant dans la chambre d'onde de pression (22, 24) à une distance (32) du fond de chambre (34).

2. Baguette profilée selon la revendication 1, **caractérisée en ce que** le canal est un tuyau formé.

3. Baguette profilée selon la revendication 1 ou 2, **caractérisée en ce que** le canal ou le tuyau (6, 8 ; 26, 28) est extrudé à l'intérieur ou à l'extérieur sur la baguette profilée.

4. Baguette profilée selon une des revendications 1 à 3, **caractérisée en ce que** plusieurs tuyaux (6, 8 ; 26, 28) ou canaux sont formés dans ou sur la baguette profilée.

5. Baguette profilée selon une des revendications 1 à 4, **caractérisée en ce qu'**il est prévu des parties de connexion (40, 42, 52) en tant que moyens de liaison ou de raccordement pour le tuyau ou le canal (6, 8 ; 26, 28).

6. Baguette profilée selon une des revendications 1 à 5, **caractérisée en ce que** le canal (26, 28) est disposé dans la chambre d'onde de pression (22, 24) en tant que conduite d'onde de pression, est fermé à son autre extrémité et présente un trou pour loger une connexion (40, 42).

7. Baguette profilée selon une des revendications 1 à 6, **caractérisée en ce qu'**il est prévu au moins deux chambres d'onde de pression (22, 24) et canaux (26, 28).
